# EUROPEAN PATENT APPLICATION

(11) **EP 4 111 871 A1**
(43) Date of publication of application: **04.01.2023**
(21) Application number: 22181700.0
(22) Date of filing: 28.06.2022
(51) Int. Cl.: A23P 20/18, A23G 3/34, A61J 3/00, B05B 15/68

(54) **APPARATUS FOR COATING CORES**

(30) Priority: 29.06.2021 IT 202100017075
(71) Applicant: Nicomac S.r.l., 20050 Liscate (MI) (IT)
(72) Inventor: NIGRIS, Tomaso, I-20133 Milano (IT)
(74) Representative: Porta & Consulenti Associati S.p.A.

(57) **Abstract**

An apparatus (1) for coating cores comprises a drum (10), in which a working chamber (15) is defined, rotatable about an axis of rotation (R) for moving a loose mass of cores in the working chamber (15); at least one spray head (20) comprising a nozzle (21) configured to deliver a coating substance onto the mass of cores in the working chamber (15); a manoeuvring member (30) configured to support and move the at least one spray head (20) in the working chamber (15); a support member (22) of the at least one spray head (20) movable towards and away from the manoeuvring member (30); a movement device (40) configured to move the support member (22) between an extended configuration distal with respect to the manoeuvring member (30) and a retracted configuration proximal to the manoeuvring member (30); wherein the movement device (40) comprises a pinion (41) associated to the manoeuvring member (30), and a rack (42) engaged with said pinion (41) and associated to the support member (22) of the at least one spray head (20).

## Description

### Field of the invention

The present invention relates to an apparatus for coating cores.

In the description provided below and in the subsequent claims, the term: "core" is used to indicate any material in particles or granules such as, for example, tablets of various shapes, substantially spherical pellets or confectionery products of various shapes to be coated.

In the following description and claims, the expression: "coating of cores", on the other hand, refers to any process by means of which cores are first coated with a film of an appropriate coating substance in liquid or powder form, and then subjected to drying to dry the previously deposited film and form a uniform coating around each core.

As is known, the coating of cores, also called "film coating", is widely used in both the pharmaceutical and food industries to coat a pharmaceutically active ingredient or food substance with a suitable coating substance or, conversely, to coat an essentially inert substance used as a carrier with an active ingredient.

The coating operation of cores is typically carried out using equipment, generally known in the field as coating pans, comprising a motorised drum in which spray heads are arranged.

The loose mass of cores is loaded into the drum, which is set in rotation to continuously stir the cores while the spray heads dispense a coating substance in liquid or powder form thereon. Simultaneously, or subsequently, the cores inside the drum are dried by the action of a suitable hot drying fluid in order to consolidate the coating film previously deposited on the cores.

### Related art

Coating pans are essentially divided into two types depending on the characteristics of the motorised drum in which the cores are loaded.

A first type includes coating pans with a "solid-wall" drum, i.e. comprising a hollow body made of solid metal, without holes, in which the circulation of the hot drying fluid is performed by means of delivery and suction devices of such fluid suitably positioned within the drum and comprising, for example, a pair of suitably perforated hollow tubular elements, which are arranged at an inclined position inside the coating pan and which during use are partially immersed in the mass of products being coated.

A second type of coating pans comprises coating pans with a "perforated wall" drum, i.e. comprising an essentially cylindrical central portion provided with through-holes, in which the circulation of the hot drying fluid is instead carried out by means of delivery and suction devices, both positioned outside of the drum, or with the delivery device arranged inside the drum and the suction device positioned outside of the drum. Commonly used coating pans are configured to process a nominal, predetermined amount of cores within the drum. Given a predetermined rotational speed of the drum, the nominal mass of cores within the same assumes a configuration of which the position of the free surface of the nominal mass of cores can be determined. The spray head nozzles are adapted to process the nominal amount of cores in the drum in such a way that, in the region where the jet of coating substance hits the free surface of the mass of cores, the width of the jet essentially coincides with the size of the free surface.

The Applicant noted that it would be advantageous to be able to use a coating pan to process also a quantity of cores different from the nominal quantity, e.g. lower, in order to increase flexibility of use. However, the Applicant has noted that, when using the currently available coating pans, when a quantity of cores is fed into the drum different from the nominal quantity of cores, the free surface of the mass of cores is arranged at a distance different from the distance intended in the case of a nominal quantity of cores so that the jet of the coating substance would hit the cores in a sub-optimal manner, leading to undesirable results such as excessive consumption of coating substance, part of which is wasted due to an uneven dispensing over the mass of cores.

The Applicant has perceived that if the spray heads could be moved with respect to the mass of cores, the spraying of coating substance could be adapted to the configuration of the free surface, thus being able to achieve an optimal coating of the cores while minimising the waste of coating substance for a variety of loading conditions of the coating pan drum.

A coating pan that allows a movement of the spray heads is disclosed in document EP3697048A1, which shows a coating device with movable spray nozzles comprising a perforated drum and a positioning unit of a set of spray nozzles. A control column that can be positioned axially within the drum houses an internal shaft and is equipped with articulated arms that include rotating nozzle supports. A transmission system based on pulley means and corresponding driving means housed in the control column and in the articulated arm simultaneously produce the contraction or extension of the articulated arm and the rotation of the set of nozzles according to the relative angular position between the control column and the inner shaft.

### Summary of the invention

The Applicant has noted that the pulley-based transmission system described in EP3697048A1 is particularly cumbersome and complex due to the large number of parts moving in relation to one other that require protection from dust and other airborne substances during operation.

The Applicant considers that the overall dimensions and complexity of such pulley means entail certain disadvantages. For example, according to the Applicant, the dimensions of the transmission system would make it difficult or even impossible to accommodate delivery and suction devices inside the drum. The Applicant considers that for this very reason the coating pan described in EP3697048A1 is of the perforated drum type. In addition, the Applicant considers that the complexity of the transmission system and in particular the numerous moving parts lead to risks of malfunctioning, faults and concomitant downtimes.

Finally, the complexity of the pulley-based transmission system definitely impacts the cost of the spray nozzle positioning unit, which in turn increases the overall cost of the coating pan.

Therefore, the Applicant has perceived that it would be advantageous to be able to adjust the position of the spray nozzles by means of a simple, practical, space-saving and low-cost mechanism.

The Applicant has found that this would allow, for example, to accommodate delivery and/or suction devices in the drum in a practical manner and to allow to implement a core coating apparatus and adjust the position of the nozzles inside the drum itself.

The present invention therefore relates, in one aspect thereof, to an apparatus for coating cores comprising:
a drum comprising a working chamber, said drum being rotatable about an axis of rotation for moving a loose mass of cores in said working chamber;
at least one spray head comprising a nozzle configured to deliver a coating substance onto the mass of cores in said working chamber;
a manoeuvring member configured to support and move said at least one spray head in said working chamber;
a support member of said at least one spray head movable towards and away from said manoeuvring member;
a movement device configured to move said support member between an extended configuration distal with respect to said manoeuvring member and a retracted configuration proximal to said manoeuvring member;
wherein said movement device comprises:
   a pinion associated to the manoeuvring member, and
   a rack engaged with said pinion and associated to the support member of said at least one spray head.

By arranging a movement device comprising a pinion and rack engaged with the pinion, it is possible to adjust the position of the spray heads within the drum by means of a rotation of the pinion and a simultaneous translation of the rack, which leads to the translation of the associated support member and at least one spray head mounted on the support member. The Applicant has found that the movement achieved by means of a simple engagement between the pinion and the rack reduces the number of mutual moving parts and simplifies the structure of the movement device by reducing its size and the likelihood of malfunctioning.

The present invention may have one or more of the preferred features described in the following detailed description. In particular, these preferred features can be combined at will according to the application requirements.

Preferably, the manoeuvring member comprises a first manoeuvring shaft connected to said pinion and rotatable about a first manoeuvring axis parallel to the axis of rotation of the drum to drive a rotation of said pinion.

Preferably, the first manoeuvring shaft operationally extends from the outside to the inside of the working chamber through a first lateral opening of the drum.

Preferably, the first manoeuvring shaft is actuated by a user outside of the working chamber either manually or automatically.

Being parallel to the axis of rotation of the drum, the first manoeuvring shaft can transmit the drive movement of the pinion from the outside of the working chamber through the first lateral opening.

Preferably, the manoeuvring member comprises a second manoeuvring shaft connected to said rack and rotatable about a second manoeuvring axis parallel to the axis of rotation of the drum.

Preferably, said rack is rotationally integral with the second manoeuvring shaft in such a way that rotations of the second manoeuvring shaft determine corresponding rotations of the rack about the second manoeuvring axis.

It is thus advantageously possible to adjust the angular orientation of the rack within the drum of the coating pan, and therefore the angular orientation of the support member associated to the rack and of the at least one spray head mounted on the support member, by means of rotations of the second manoeuvring shaft of the manoeuvring member. Preferably, the second manoeuvring shaft operationally extends from the outside to the inside of the working chamber through a first lateral opening of the drum.

Preferably, the second manoeuvring shaft is actuated by a user outside of the working chamber either manually or automatically.

Being parallel to the axis of rotation, the second manoeuvring shaft can transmit rotational movements of the rack about the second axis of rotation from the outside of the working chamber through the first lateral opening.

Preferably, said first manoeuvring shaft is coaxial to said second manoeuvring shaft. Preferably, the first manoeuvring shaft is at least partially housed within the second manoeuvring shaft.

The footprint of the manoeuvring device is thus advantageously further reduced. Preferably, a rotation of said second manoeuvring shaft determines a movement of the at least one spray head along a circular arc trajectory about the second manoeuvring shaft. By adjusting the position of at least one spray head along the circular arc, it is possible to adapt the position of the spray head as a function of the angular position of the free surface of the mass of cores with respect to the axis of rotation of the drum, and in particular as a function of the inclination of the free surface of the mass of cores with respect to a vertical plane passing through the centreline of the drum, this inclination varying according to the rotational speed of the drum.

Preferably, the manoeuvring member is movable parallel to the axis of rotation of the drum through a first lateral opening of the drum between an operative position in which the at least one spray head is arranged within the working chamber and a non-operative position in which the at least one spray head is extracted from the working chamber. The manoeuvring member, and consequently the support member of at least one spray head and the movement device of this support member, can thus be extracted out of the drum when not in use in order to free the first lateral opening and to carry out any maintenance or repair work.

Preferably, the movement device of the support member of the at least one spray head comprises a protective element defining a fluid-tight housing chamber for said pinion and said rack.

The fluid-tight housing chamber protects the gearing between the pinion and the rack from any intrusion of fluids, dust or other substances dispersed within the chamber. Preferably, said rack of the movement device of the support member of the at least one spray head is slidingly movable through an opening of the housing chamber of said protective element.

Preferably, this manoeuvring member is positioned at an offset position with respect to the axis of rotation of the drum.

In this way, it is advantageously possible to position other functional elements of the coating pan at the axis of rotation of the drum, such as a ventilation unit configured to circulate a suitable drying fluid in the case of a coating pan with a "solid-wall" drum. Preferably, a distance between the first manoeuvring axis of the first manoeuvring shaft connected to the pinion and the axis of rotation of the drum is comprised between 150 mm and 400 mm, more preferably between 200 mm and 350 mm, and even more preferably, between 250 mm and 300 mm.

Preferably, a ventilation assembly is provided, configured to circulate a suitable drying fluid in the drum, e.g. air heated at an appropriate temperature. Preferably, said ventilation assembly comprises a delivery device and/or a suction device of the drying fluid.

In at least one embodiment, said ventilation assembly is operatively arranged in said working chamber in a position next to and offset from said manoeuvring member.

Preferably, the ventilation assembly is movable parallel to the axis of rotation of the drum through a second lateral opening of the drum, preferably opposite to the first lateral opening with respect to the working chamber, between an operative position in which the ventilation assembly is arranged within the working chamber and a non-operative position in which the ventilation unit is extracted from the working chamber.

As mentioned above, in a preferred embodiment, the ventilation assembly can be operatively positioned at the axis of rotation of the drum.

Preferably, the coating pan comprises a pair of movement devices.

Preferably, said support member of said at least one spray head comprises a support bar oriented parallel to the axis of rotation of the drum between said pair of movement devices. Preferably, a plurality of spray heads is mounted on the support bar.

Preferably, the coating pan comprises at least a first flexible hose in fluid communication with said at least one spray head and configured to supply a coating substance to said at least one spray head.

Preferably, said at least one first flexible hose is in fluid communication with a first conduit inside the manoeuvring member adapted to receive a coating substance from a source of coating substance external to the drum.

Preferably, at least a second flexible hose is provided in fluid communication with said at least one spray head and configured to supply a dispensing fluid to said at least one spray head.

Preferably, said at least a second flexible hose is in fluid communication with a second conduit within the manoeuvring member adapted to receive a delivery fluid of the coating substance from a dispensing fluid source external to the drum.

Preferably, there is a plurality of said spray heads supported by said support member.

In at least one preferred embodiment, said drum is of the solid-wall type.

The small footprint of the manoeuvring and movement device of the present invention is particularly advantageous in the case of the solid-wall type drum, as it leaves enough free space within the working chamber defined in the drum to be able to accommodate a ventilation assembly comprising both the delivery device and the suction device of the drying fluid.

### Brief description of the figures

Additional features and advantages of the present invention will become better apparent from the following detailed description of a possible preferred embodiment, illustrated by way of non-limiting example in the appended drawings, in which:

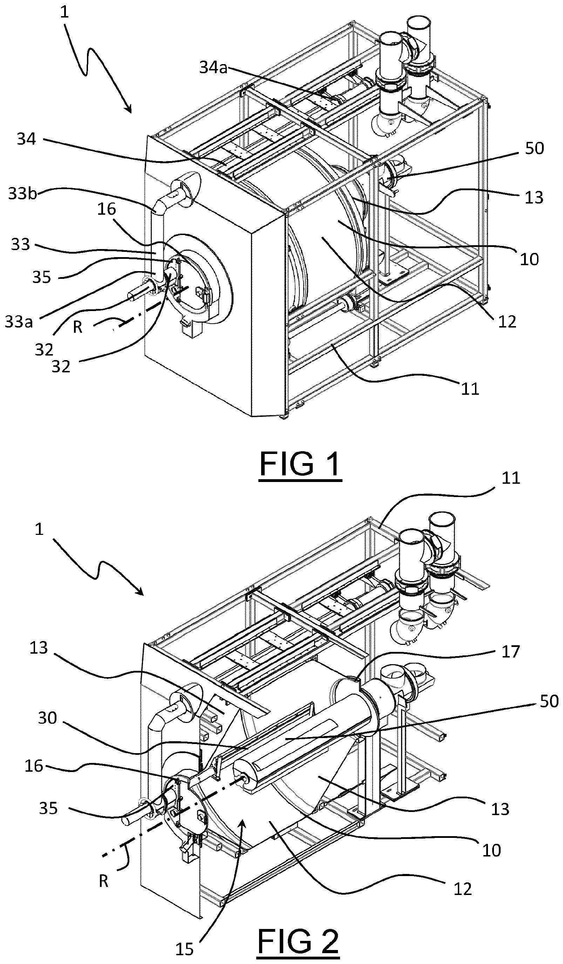

- figure 1 shows a perspective view of an apparatus for coating cores according to a preferred embodiment of the present invention, with some elements removed for simplicity;
- figure 2 shows a sectional perspective view of the apparatus of figure 1, with some elements removed for simplicity;

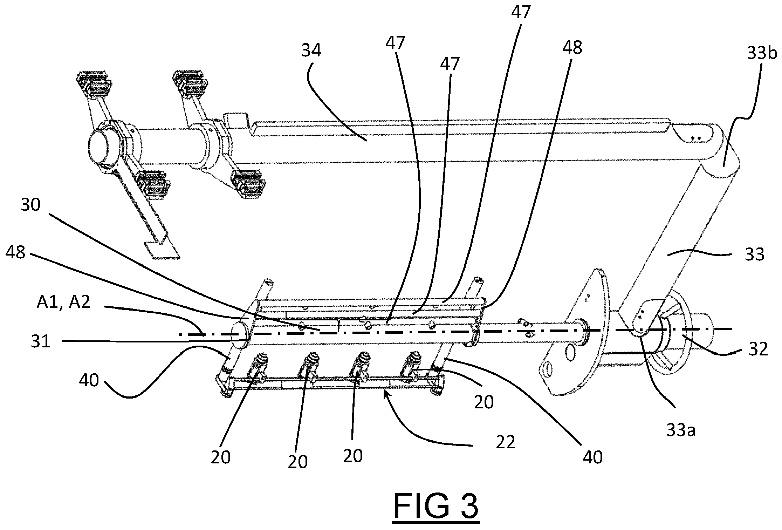

- figure 3 shows an enlarged scale perspective view of some details of the apparatus for coating cores of figure 1;

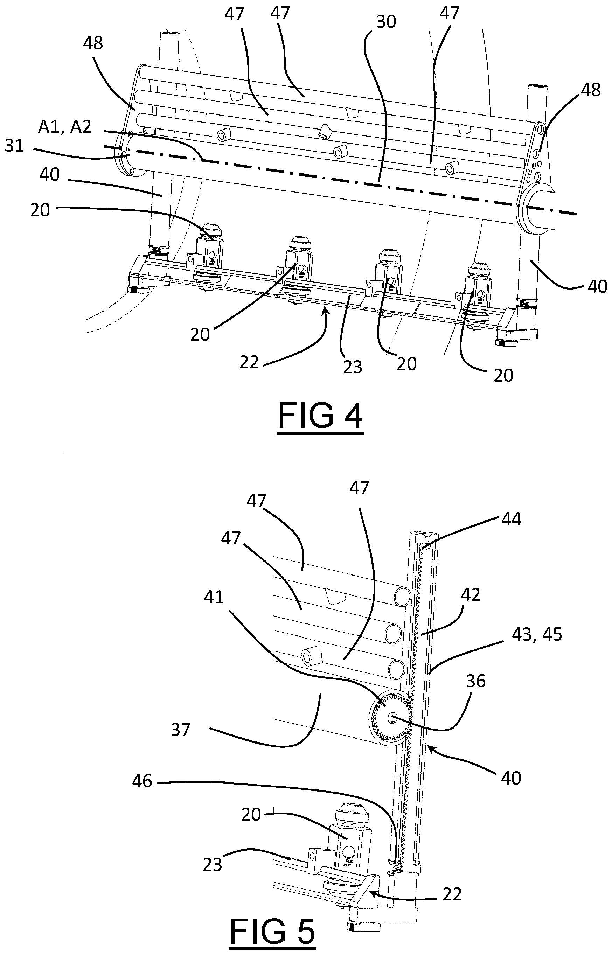

- figure 4 shows a first operative configuration of the apparatus of figure 1 in which a manoeuvring member of a plurality of spray heads is depicted in a first angular orientation with respect to an axis of rotation of the manoeuvring member and the spray heads are in a proximal retracted configuration with respect to the manoeuvring member;
- figure 5 shows a section of some details of figure 4;

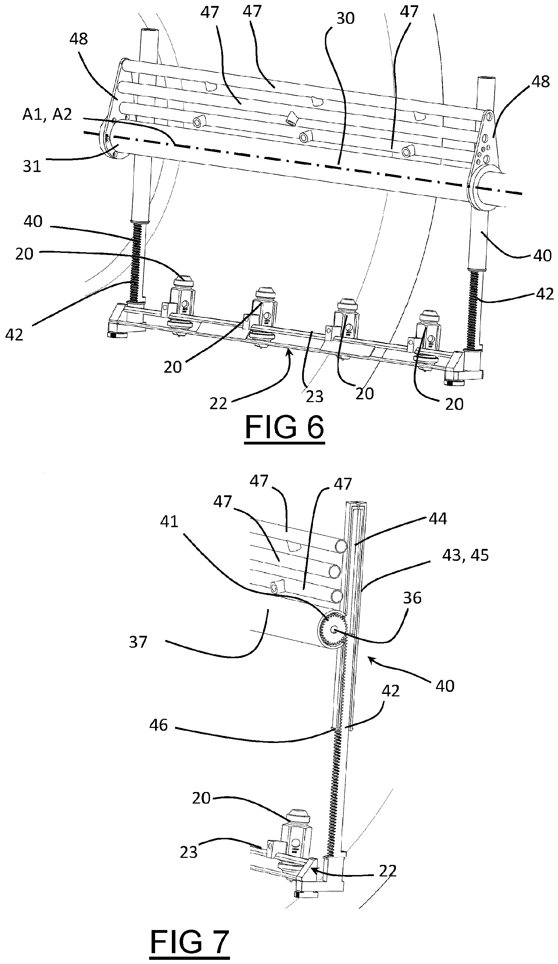

- figure 6 shows a second operative configuration of the apparatus of figure 1 in which the manoeuvring member of the spray heads is depicted in the aforementioned first angular orientation with respect to the axis of rotation of the manoeuvring member and the spray heads are in a first extended configuration distal with respect to the manoeuvring member of the spray heads;
- figure 7 shows a third operative configuration of the apparatus of figure 1 in which the manoeuvring member of the spray heads is depicted in the aforementioned first angular orientation with respect to the axis of rotation of the manoeuvring member and the spray heads are in a second extended configuration distal with respect to the manoeuvring member of the spray heads and in which certain details are illustrated in section;

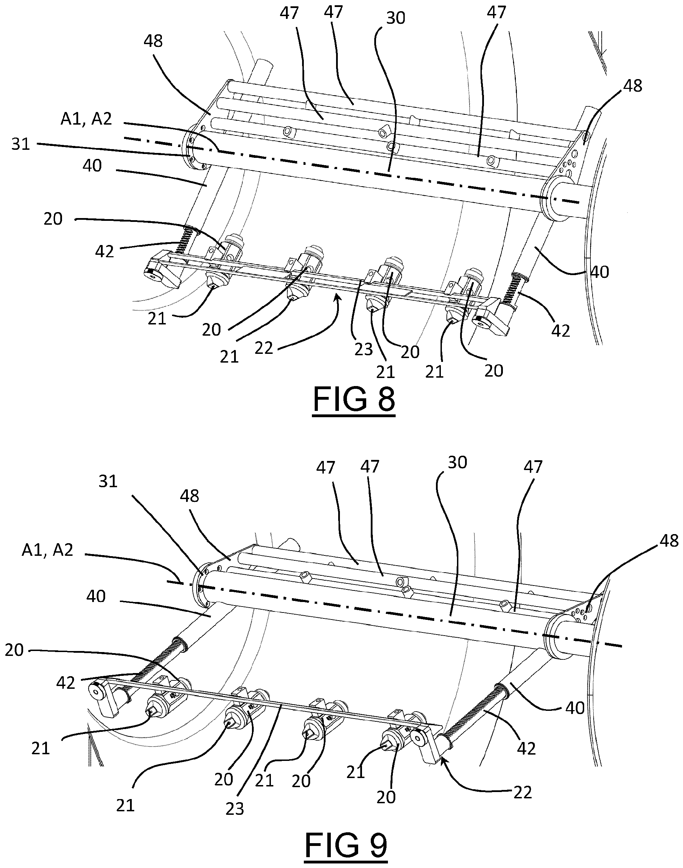

- figure 8 shows a fourth operative configuration of the apparatus of figure 1 in which the manoeuvring member of the spray heads is depicted in a second angular orientation with respect to the axis of rotation of the manoeuvring member and the spray heads are in a partially extended configuration proximal with respect to the manoeuvring member of the spray heads;
- figure 9 shows a fifth operative configuration of the apparatus of figure 1 in which the manoeuvring member of the spray heads is depicted in a third angular orientation with respect to the axis of rotation of the manoeuvring member and the spray heads are in a completely extended configuration distal with respect to the manoeuvring member of the spray heads.

### Detailed description of currently preferred embodiments of the invention

An apparatus for coating cores, or coating pan, according to a preferred embodiment of the present invention is indicated by numerical reference 1 in figure 1.

The apparatus 1 comprises a drum 10 rotatable about a horizontal axis R. The drum 10 is rotatably supported by a frame 11 comprising a support base conformed to keep the axis of rotation R horizontal and configured to support the operating components of the apparatus 1 described below.

The drum 10 extends about the axis of rotation R and comprises a cylindrical or substantially cylindrical main wall 12 and two opposite lateral walls 13 on opposite sides of the main wall 12, which are truncated cone-shaped or substantially truncated cone-shaped.

A working chamber 15 is defined within the drum 10, delimited by the main wall 12 and by the lateral walls 13 and symmetrical with respect to the axis of rotation R. The working chamber 15 is configured to receive a mass of cores to be coated, not illustrated, which operatively lies on a lower portion of the main wall 12 and of the lateral walls 13 and is continuously stirred during rotation of the drum 10.

To this end, the main wall 12 of the drum 10 can be provided with stirring fins or blades known *per se* and not shown in the figures.

In the embodiment shown in the figures, the drum 10 is of the "solid wall" type and the main wall 12 is made of solid material along the entire extension between the two lateral walls 13. In other words, the main wall 12 has no holes.

Unless otherwise explicitly stated, the contents of this description apply to both the "solid-wall" embodiment of the drum 10 illustrated in the figures and to a "perforated-wall" embodiment of the drum 10 not illustrated for the sake of simplicity.

In the preferred embodiment illustrated, the drum 10 is provided with a first lateral opening 16 formed in one of the lateral walls 13 at or near the axis of rotation R. The first lateral opening 16 provides access to the working chamber 15, for example for inserting or removing the cores.

Preferably, the drum 10 is also provided with a second lateral opening 17 formed in the other lateral wall 13, at or near the axis of rotation R, at a position opposite the first lateral opening 16 with respect to the working chamber 15.

Preferably, at least one spray head 20 comprising a nozzle 21 configured to deliver a coating substance onto the mass of cores contained in the working chamber 15 is operatively arranged in the working chamber 15.

Preferably, the nozzle 21 is configured to spray a jet of a preferably liquid, atomised substance of a substantially conical shape.

Preferably, the apparatus 1 comprises a plurality of spray heads 20 each comprising a respective nozzle 21 and, even more preferably, a number of spray heads 20 between three and eight, for example four as illustrated in figures 3, 4, 6, 8 and 9.

Preferably, the spray heads 20 are mounted on a support member 22, preferably comprising a bar 23 extending parallel to the axis of rotation R.

The spray heads 20 are positioned on the support member 22 in a preferably adjustable manner in a direction parallel to the axis of rotation R by sliding along the bar 23 itself and subsequent locking. In the preferred embodiment illustrated, a screw or pawl that can be locked against the bar 23 is provided to secure the spray heads 20.

The apparatus 1 comprises a manoeuvring member 30 configured to support and move the support member 22 and the spray heads 20 mounted thereon.

The manoeuvring member 30 extends parallel to the axis of rotation R of the drum 10 between a first end 31 and a second end 32.

At the second end 32, the manoeuvring member 30 is connected to a vertical element 33 configured to support the manoeuvring member 30 and vertically upwardly extending between a first end 33a connected to the second end 32 of the manoeuvring shaft 31 and a second end 33b (figure 3).

At the second end 33b, the vertical element 33 is connected to a horizontal element 34 configured to support the manoeuvring member 30 and the vertical element 33 and horizontally extending outside of the drum 10 in parallel to the axis of rotation R of the drum 10 itself (see figures 1 and 2).

In other words, the manoeuvring element 30, the vertical element 33 and the horizontal element 34 define a "U" configuration.

The manoeuvring member 30 is movable in parallel to the axis of rotation R of the drum 10 through the first lateral opening 16 between an operative position, illustrated in the appended figures, in which the first end 31 of the manoeuvring member 30 is arranged inside the working chamber 15 and the second end 32 of the manoeuvring member 30 is arranged outside of the working chamber 15, and a non-operative position in which the first end 31 and the second end 32 of the manoeuvring member 30 are both arranged outside of the working chamber 15.

The horizontal element 34 is supported by the support frame 11 in a sliding manner in respective guides 34a to allow translation between the operative position and the non-operative position of the manoeuvring member 30.

In the operative position of the manoeuvring member 30, the spray heads 20 are arranged within the working chamber 15 so that a suitable coating substance can be sprayed onto the mass of cores and the manoeuvring member 30 extends through the first lateral opening 16.

In the non-operative position of the manoeuvring member 30, the spray heads 20 and the manoeuvring member 30 are extracted from the working chamber 15 so as to free the working chamber 15 and the first lateral opening 16.

A closing element 35 is associated to the manoeuvring member 30 and translates along the axis of rotation R together with the latter member to seal the first lateral opening 16 when the manoeuvring member is in the operative position.

The apparatus 1 further comprises at least one movement device 40 configured to move the support member 22, and the spray heads 20 connected thereto, between a partially or fully extended configuration, illustrated in figures 6, 7, 8 and 9, and a retracted configuration, illustrated in figures 3, 4 and 5.

In the extended configuration, the support member 22 of the spray heads 20 is distal with respect to the manoeuvring member 30 and its distance from a lower portion of the drum 10 wherein the mass of cores lies in use is minimal.

In the retracted configuration, the support member 22 of the spray heads 20 is proximal to the manoeuvring member 30 and its distance from a lower portion of the drum 10 wherein the mass of cores lies in use is maximum.

The movement device 40 also allows to adjust the position of the support member 22 in intermediate configurations between the extended configuration and the retracted configuration. Such intermediate configurations are, for example, visible in figures 6 and 8.

Preferably, the apparatus 1 comprises two movement devices 40 arranged at opposite ends of the support member 22 of the spray heads 20, of which a first movement device 40 arranged at the first end 31 of the manoeuvring member 30 and a second movement device 40 arranged between the first end 31 and the second end 32 of the manoeuvring member 30.

Each movement device 40 comprises a pinion 41 associated to the manoeuvring member 30 and a rack 42 engaged in the pinion 41 and associated to the support member 22 of the spray heads 20.

In the preferred embodiment illustrated, the manoeuvring member 30 of the spray heads 20 comprises a first manoeuvring shaft 36 extending along a first manoeuvring axis A1 parallel to the axis of rotation R and rotatable about the first manoeuvring axis A1.

In the operative position of the manoeuvring member 30 of the spray heads 20, the first manoeuvring shaft 36 is rotationally operable by an operator outside of the working chamber 15, for example by manual or automatic operating means, and is configured to transmit a rotary movement to the pinion 41 inside the working chamber 15.

In fact, the pinion 41 is preferably integral with the first manoeuvring shaft 36 and is rotatable by operating the first manoeuvring shaft 36 about the first manoeuvring axis A1. In the preferred embodiment illustrated, the manoeuvring member 30 of the spray heads 20 further comprises a second manoeuvring shaft 37 extending along a second manoeuvring axis A2 parallel to the axis of rotation R and rotatable about the second manoeuvring axis A2.

In the operative position of the manoeuvring member 30 of the spray heads 20, the second manoeuvring shaft 37 is rotatably operable by an operator outside of the working chamber 15 when the manoeuvring member 30 is in the operative position, for example by manual or automatic operating means, and is configured to vary the angular position of the rack 42 within the working chamber 15.

Preferably, the first manoeuvring shaft 36 and the second manoeuvring shaft 37 are coaxial.

In particular, the second manoeuvring shaft 37 is preferably hollow and the first manoeuvring shaft 36 is rotatably housed in a cavity of the second manoeuvring shaft 37. In the preferred embodiment illustrated, the rack 42 is rotatably integral with the second manoeuvring shaft 37 so that the rack can rotate about the second manoeuvring axis A2 by operating the second manoeuvring shaft 37.

Preferably, the rack 42 extends along a direction tangent to the pinion 41 and substantially radial with respect to the second manoeuvring axis A2 and is engaged in respective guides integral with the second manoeuvring shaft 37 to allow the rack translation along its extension direction.

Preferably, one end of the rack 42 is fixed to the support member 22 of the spray heads 20 to support the support member 22 within the working chamber 15.

A rotation of the first manoeuvring shaft 36 with respect to the second manoeuvring shaft 37 causes a translation of the rack 42 which causes a movement of the support member 22 of the spray heads 20 between a (partially or fully) extended configuration and the retracted configuration.

A rotation of the second manoeuvring shaft 37 causes a rotation of the rack 42 about the second manoeuvring axis A2 and thus a change in the angular orientation of the support member 22 of the spray heads 20 within the drum 10.

In essence, a rotation of the second manoeuvring shaft 37 is followed by a concomitant change in the angular orientation of the rack 42 and thus of the spray heads 20 with respect to the free surface of the mass of cores loaded in the working chamber 15 defined within the drum 10.

In this preferred embodiment of the invention, the rotation of the second manoeuvring shaft 37 causes a movement of the spray heads 20 along a circular arc extending about the second manoeuvring shaft A2.

Figures 8 and 9 show the rack 42 and the spray heads 20 arranged at different angular positions with respect to those in figures 4 to 7 due to a rotation of the second manoeuvring shaft 37.

Figures 8 and 9 also show the rack 42 and the spray heads 20 arranged in two different extended configurations, partial and total respectively, due to a rotation of the first manoeuvring shaft 36.

The movement device 40 also includes a protective element 43 that defines a fluid-tight housing chamber 44 for the pinion 41 and the rack 42.

Preferably, the protective element 43 comprises a box-shaped body 45 having an opening 46 through which the rack 42 is slidingly movable between the retracted configuration and the extended configuration.

The housing chamber 44 protects the pinion 41 and the rack 42, and especially the engaging area therebetween, from the intrusion of fluids, dust and other substances dispersed within the working chamber 15 and which may be produced, for example, by stirring the mass of cores and by atomising the coating substance.

In the retracted configuration of the support member 22 of the spray heads 20, the rack 42 is substantially completely housed in the housing chamber 44 (e.g. see figures 3, 4 and 5).

In the extended configuration of the support member 22 of the spray heads 20 the rack 42 is partially or completely extracted from the housing chamber 44 (e.g. see figures 6, 7, 8 and 9).

Preferably, the protective element 43 further comprises a bellows, not shown, having one end fixed to the box-shaped body 45 at the opening 46 and an opposite end fixed to the rack 42, preferably at or near the end of the rack 42 fixed to the support member 22. Preferably, the bellows is configured to cover and protect the portion of the rack 42 extracted from the housing chamber 44 and is deformable to accommodate the positions of the rack 42 between the extracted configuration and the retracted configuration.

In a preferred embodiment, the bellows is, for example, made of silicone.

One or more additional support bars 47 oriented parallel to the axes of rotation A1, A2 and supported by respective radial arms 48 are also mounted on the manoeuvring member 40.

The additional support bars 47 can advantageously be used to mount sensors, not illustrated, to control the conditions in the working chamber 15, such as a pyrometer.

Preferably, the apparatus 1 comprises a plurality of first flexible hoses, not shown, each having a first end in fluid communication with a respective spray head 20 and a second end in fluid communication with a source of a coating substance external to the drum for supplying the coating substance to the spray head 20.

The first flexible hoses can be supported by the additional support bars 47.

Preferably, the apparatus 1 comprises a plurality of second flexible hoses, not shown, each having a first end in fluid communication with a spray head 20 and a second end in fluid communication with a source of a suitable atomising fluid, e.g. compressed air, for supplying the spray head 20 with the atomising fluid.

The second flexible hoses can be supported by the additional support bars 47.

The first flexible hoses and the second flexible hoses are deformable in a non-permanent manner to allow movement from the extended configuration to the retracted configuration. The spray heads 20, the support member 22, the manoeuvring member 30 and the movement device 40 are illustrated in detail in figures 4-9, which show construction details of the embodiment of the drum 10 of the illustrated so-called "solid-wall" coating pan 1, equally applicable to a possible embodiment of the drum 10 of the so-called "perforated wall" coating pan 1.

Preferably, the manoeuvring member 30 is arranged at an offset position with respect to the axis of rotation R of the drum 10.

In particular, the distance between the first manoeuvring axis A1, coaxial with the second manoeuvring axis A2, and the axis of rotation R of the drum 10 is preferably comprised between 150 mm and 400 mm, more preferably between 200 mm and 350 mm and, even more preferably, comprised between 250 mm and 300 mm.

The apparatus 1 comprises a ventilation assembly 50 configured to circulate a drying fluid in the drum 10.

In the preferred "solid wall" embodiment of the drum 10 shown in the figures, the ventilation assembly 50 is operatively housed inside the working chamber 15 of the drum 10. In this preferred embodiment, the ventilation assembly 50 comprises a delivery device and a suction device for a drying fluid of the coating substance dispensed onto the cores. Preferably, the ventilation assembly 50 extends along the axis of rotation R and is movable in parallel to the axis of rotation R of the drum 40 through the second lateral opening 17, between an operative position in which the ventilation assembly 50 is active within the working chamber 15 and a non-operative position in which the ventilation assembly 50 is extracted from the working chamber 15.

Preferably, in the operative position, the ventilation assembly 50 is arranged aside of and offset with respect to the manoeuvring member 30 of the spray heads 20, in the space created between the manoeuvring member 30 and the axis of rotation R due to the reduced dimensions of the manoeuvring member 30.

In an embodiment of the drum 10 of the coating pan 1 of the "perforated wall" type, not illustrated, the ventilation assembly may comprise a delivery device and a suction device for a drying fluid of the coating substance externally arranged with respect to the drum 10.

Obviously, a person skilled in the art may make numerous modifications and variations to the apparatus 1 for coating cores described above in order to meet specific and contingent requirements, all of which are within the scope of protection of the present invention as defined by the following claims.

## Claims

1. Apparatus (1) for coating cores comprising:
a drum (10) comprising a working chamber (15), said drum (10) being rotatable about an axis of rotation (R) for moving a loose mass of cores in said working chamber (15);
at least one spray head (20) comprising a nozzle (21) configured to deliver a coating substance onto the mass of cores in said working chamber (15);
a manoeuvring member (30) configured to support and move said at least one spray head (20) in said working chamber (15);
a support member (22) of said at least one spray head (20) movable towards and away from said manoeuvring member (30);
a movement device (40) configured to move said support member (22) between an extended configuration distal with respect to said manoeuvring member (30) and a retracted configuration proximal to said manoeuvring member (30);
wherein said movement device (40) comprises:
a pinion (41) associated to the manoeuvring member (30), and
a rack (42) engaged with said pinion (41) and associated to the support member (22) of said at least one spray head (20).

2. Apparatus (1) according to claim 1, wherein the manoeuvring member (30) comprises a first manoeuvring shaft (36) connected to said pinion (41) and rotatable about a first manoeuvring axis (A1) parallel to the axis of rotation (R) of the drum (10) to drive a rotation of said pinion (41).

3. Apparatus (1) according to claim 1 or 2, wherein the manoeuvring member (30) comprises a second manoeuvring shaft (37) connected to said rack (42) and rotatable about a second manoeuvring axis (A2) parallel to the axis of rotation (R) of the drum (10), and wherein said rack (42) is rotationally integral with the second manoeuvring shaft (37) in such a way that rotations of said second manoeuvring shaft (37) determine corresponding rotations of the rack (42) about the second manoeuvring axis (A2).

4. Apparatus (1) according to claims 2 and 3, wherein said first manoeuvring shaft (36) is coaxial to said second manoeuvring shaft (37).

5. Apparatus (1) according to claim 4, wherein a rotation of said second manoeuvring shaft (37) determines a movement of the at least one spray head (20) along a circular arc trajectory about the second manoeuvring shaft (A2).

6. Apparatus (1) according to any one of the preceding claims, wherein the manoeuvring member (30) is movable parallel to the axis of rotation (R) of the drum (10) through a first lateral opening (16) of the drum (10) between an operative position in which the at least one spray head (20) is arranged within the working chamber (15) and a non-operative position in which the at least one spray head (20) is extracted from the working chamber (15).

7. Apparatus (1) according to any one of the preceding claims, wherein said movement device (40) comprises a protective element (43) defining a fluid-tight housing chamber (44) for said pinion (41) and said rack (42).

8. Apparatus (1) according to claim 7, wherein said rack (42) of the movement device (40) is slidingly movable through an opening (46) of the housing chamber (44) of said protective element (43).

9. Apparatus (1) according to any one of the preceding claims, wherein said manoeuvring member (30) is positioned at an offset position with respect to the axis of rotation (R) of the drum (10).

10. Apparatus (1) according to any one of the preceding claims, comprising a ventilation assembly (50) configured to circulate a drying fluid in the drum (10).

11. Apparatus (1) according to claim 10, wherein said ventilation assembly (50) is operatively arranged in the working chamber (15) in a position next to and offset from said manoeuvring member (30).

12. Apparatus (1) according to claim 11, wherein said ventilation assembly (50) is operatively positioned at the axis of rotation (R) of the drum (10).

13. Apparatus (1) according to any one of the preceding claims, comprising a pair of movement devices (40) and wherein said support member (22) comprises a support bar (23) oriented parallel to the axis of rotation (R) of the drum (10) between said pair of movement devices (40).

14. Apparatus (1) according to any one of the preceding claims, comprising at least a first flexible hose in fluid communication with said at least one spray head (20) and configured to supply a coating substance to said at least one spray head (20).

15. Apparatus (1) according to any one of the preceding claims, comprising at least a second flexible hose in fluid communication with said at least one spray head (20) and configured to supply a dispensing fluid to said at least one spray head (20).
